Europäisches Patentamt

(19) European Patent Office    (11) Numéro de publication: **0 142 484**

Office européen des brevets    **B1**

(12) # FASCICULE DE BREVET EUROPÉEN

(45) Date de publication du fascicule du brevet:
**25.11.87**

(51) Int. Cl.⁴: **A 01 D 33/00,** A 01 D 75/28

(21) Numéro de dépôt: **84870133.0**

(22) Date de dépôt: **14.09.84**

(54) **Installation à utiliser en vue de mettre à niveau une machine agricole, entre autres, une machine agricole tirée par un tracteur.**

(30) Priorité: **15.09.83 BE 211542**

(43) Date de publication de la demande:
**22.05.85 Bulletin 85/21**

(45) Mention de la délivrance du brevet:
**25.11.87 Bulletin 87/48**

(84) Etats contractants désignés:
**DE FR GB**

(56) Documents cité:
**FR-A-2 303 463**
**GB-A-1 594 760**
**US-A-1 822 211**

**Brochure commerciale du constructeur, AVR-Machinery, Arracheuse simplifiée TT22SK et TT25SK**

(73) Titulaire: **P.V.B.A. AVR- MACHINERY,
Meensesteenweg, 529, B-8810 Roeselare (BE)**

(72) Inventeur: **Nollet, Norbert, Meensesteenweg 529,
b-8810 Roeselare (BE)**

(74) Mandataire: **Pieraerts, Jacques, Bureau Gevers
S.A. rue de Livourne 7, Bte. 1, B-1050 Bruxelles
(BE)**

LIBER, STOCKHOLM 1987

EP 0 142 484 B1

## Description

Cette invention se rapporte à une installation à utiliser en vue de mettre à niveau une machine agricole, entre autres, mais non exclusivement, une machine agricole tirée par un tracteur, telle qu'une arracheuse de pommes de terre ou de betteraves, dans laquelle l'angle que forme au moins un essieu d'une roue avec le plan horizontal peut être réglé grâce à un montage à charnière entre le châssis de la machine et le moyen d'une roue. Lorsque des machines agricoles tirées par des tracteurs travaillent sur des terrains en pente, ces machines agricoles ont tendance à glisser de telle sorte qu'elles ne suivent pas exactement le tracteur dans le même sillon.

Dans certaines circonstances, ceci est extrêmement défavorable. Lors de l'arrachage de la récolte de pommes de terre par l'exemple l'ados est endommagé ce qui a pour conséquence que l'arrachage des pommes de terre se fait dans de mauvaises conditions, ce qui peut endommager les pommes de terre.

Il est déjà connu (Brochure commerciale du constructeur AVR-Machinery, Arracheuse simplifiée TT 22 SK et TT 25 SK) de remédier dans une certaine mesure à cet inconvénient en réglant les roues de guidage de la machine en fonction de la déclivité du terrain. On entend par là qu'à l'aide d'un cylindre, hydraulique, par exemple, on peut agir sur l'inclinaison par rapport au plan horizontal d'au moins un essieu de ces roues de guidage. L'horizontalité de la machine se trouve bien assurée mais le glissement sur un terrain fortement en pente n'est ni contrecarré ni empêché.

L'invention a pour but de décrire une installation grâce à laquelle, à l'aide de moyens techniques simples, le glissement de la machine agricole se trouve empêché de telle sorte que la machine demeure partiellement dans la position horizontale désirée mais suit exactement le sillon du tracteur.

A cet effet, selon l'invention, au moins un essieu est monté avec une charnière dont l'axe de pivotement forme, avec le plan horizontal, un angle γ autour duquel l'essieu pivote, l'angle γ de l'axe étant tel que pour un mouvement pivotant vers le haut ou vers le bas de l'essieu, un pivotement de la roue en question est simultanément assuré par rapport au sens de déplacement, i.e. respectivement vers l'arrière ou vers l'avant de la machine, la disposition finale de la roue contrariant le glissement latéral de la machine agricole sur une pente.

D'autres détails et avantages de l'invention ressortiront de la description donnée ci-après d'une installation à utiliser en vue de mettre à niveau sur des terrains inclinés une machine agricole telle que notamment une arracheuse de pommes de terre ou de betteraves, selon l'invention. La description n'est donnée qu'à titre d'exemple, et ne limite pas l'invention. Les notations de référence se rapportent aux figures ci-annexées.

La figure 1 est une vue latérale schématique de l'installation selon l'invention.

La figure 2 est une vue schématique à l'arrière de l'installation selon l'invention.

La figure 3 est une vue schématique en plan de l'installation selon l'invention.

Les figures 4 à 7 illustrent schématiquement, à une plus faible échelle, le réglage d'au moins une roue par rapport à la machine agricole pendant un travail sur des terrains présentant des déclivités alternatives.

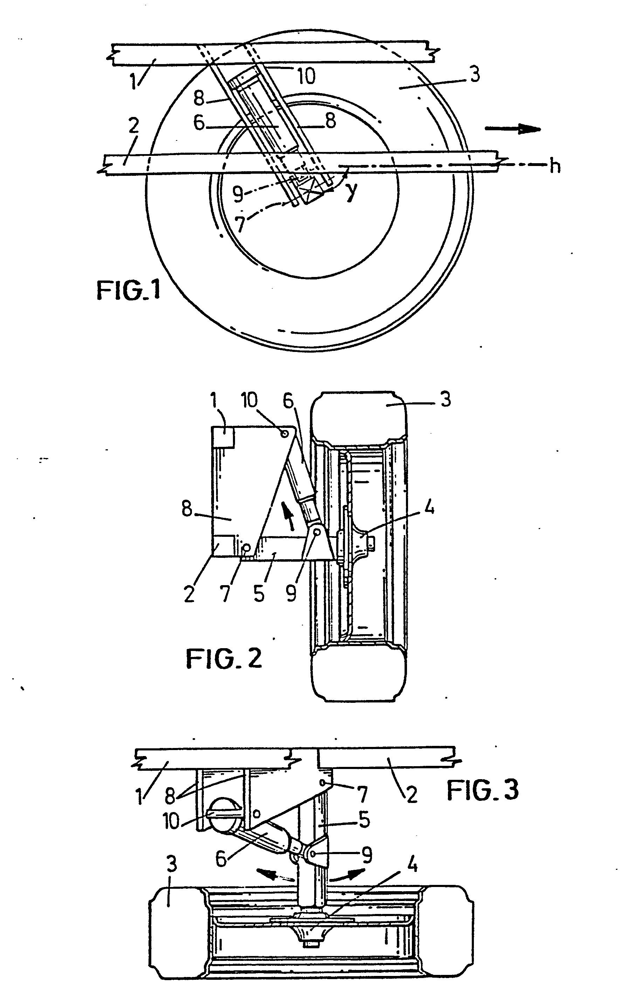

Dans les figures 1 et 2, on aperçoit deux longerons 1 et 2, de la machine agricole. Les longerons peuvent, dans d'autres cas, constituer des éléments non horizontaux de la machine. La disposition horizontale selon la figure 1 est aléatoire et non pas obligatoire.

La roue 3 est montée par son moyeu 4 sur un essieu oscillant 5. Cet essieu peut basculer grâce à l'action d'un cylindre hydraulique 6 autour d'un axe 7. Grâce à cette construction, la machine agricole est "mise à niveau", c'est-à-dire qu'elle est disposée horizontalement en tenant compte de la déclivité du terrain. Cette installation horizontale n'est cependant pas en état d'empêcher et de contrarier le glissement de la machine sur un terrain présentant une déclivité. La construction selon la demande est essentielle du point de vue de l'invention, construction selon laquelle l'axe 7 autour duquel pivote l'essieu 5 est monté de telle sorte par rapport au plan horizontal qu'il forme un angle avec celui-ci. Cet angle γ (figure 1) est déterminé par la première droite qui correspond à la ligne horizontale h, considérée dans le sens du déplacement et une seconde droite qui est formée par l'axe 7 lui-même.

Quoique l'axe 7 disposé de biais puisse être monté dans cette position en faisant appel à des structures variées, une forme d'exécution préférentielle est constituée par un montage dans lequel l'axe précité 7 est logé entre deux petites plaques 8 disposées de biais. Le cylindre hydraulique 6 est alors monté à basculement autour d'axes de pivotement 9 et 10. L'axe de pivotement 10 est, ainsi d'ailleurs que l'axe 7, logé entre les petites plaques 8.

L'angle que forment les plaques 8 avec le sens de déplacement de la machine, est bien visible à la figure 1. A cette figure, le sens de déplacement est indiqué par une flèche. Tel qu'il a déjà été exposé, ces petites plaques 8 forment un excellent montage pour l'axe incliné 7, mais il est évident qu'on peut également faire appel à d'autres structures lorsque, par exemple, les longerons de la machine diffèrent de la disposition représentée ici à titre d'exemple.

La caractéristique essentielle de l'invention est donc la disposition de l'axe 7 selon un axe géométrique qui forme, avec le plan horizontal un angle et cela tel que représenté clairement à la figure 1. Lorsque l'essieu 5 se soulève d'un angle β, la roue 3 s'installe selon un angle α, la disposition de la roue 3 s'opposant au phénomène de glissement déjà décrit précédemment.

Les figures schématiques 4 à 7 illustrent très clairement le fonctionnement de l'installation.

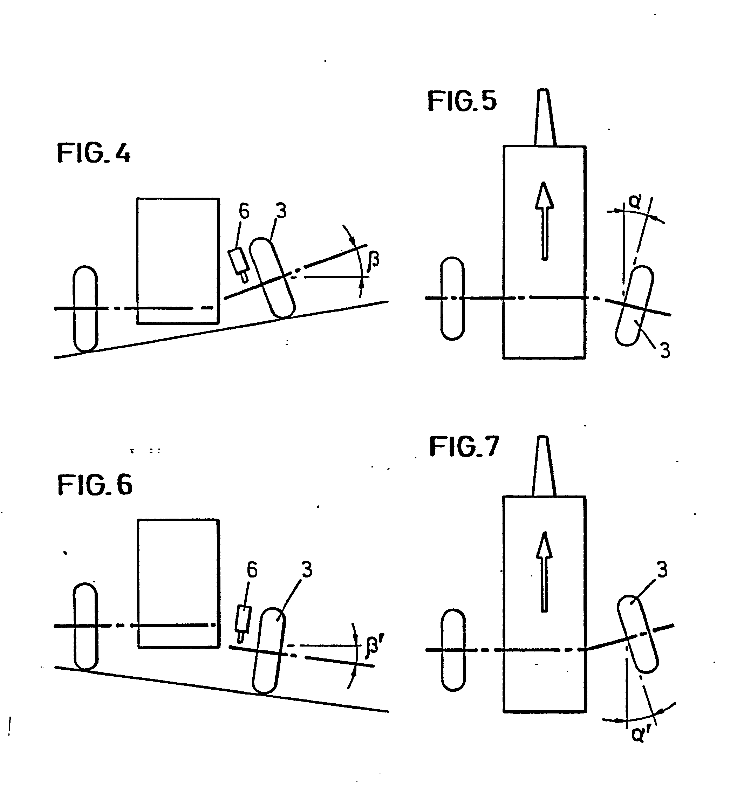

A la figure 4, est représentée une machine agricole qui travaille sur un terrain incliné vers la gauche (selon la figure). L'axe 5 est soulevé grâce à l'action du cylindre hydraulique 6. Ce mouvement de l'essieu 5 autour de l'axe incliné 7 provoque l'installation de la roue 3 selon un angle $\alpha$ tel que représenté par la figure 5.

Dans la situation inverse, dans laquelle le terrain est incliné vers la droite (selon la figure 6), l'horizontalité de la machine agricole est toujours assurée grâce à l'action du cylindre hydraulique 6 qui déplace l'essieu 5 d'un angle $\beta'$, vers le bas. Grâce à la disposition de l'axe incliné 7, il résulte une installation de la roue 3 selon un angle $\alpha'$ (figure 7).

De la description de l'installation qui vient d'être donnée ci-dessus, il résulte que la disposition fondamentale de l'axe 7 autour de laquelle l'axe 5 pivote assure une installation automatique de la roue considérée, cela directement en fonction de l'installation des angles $\beta$ et $\beta'$, donc en fonction de la déclivité du terrain. La construction selon l'invention assure donc une automaticité dela disposition d'au moins une roue 3 par rapport au sens de déplacement de la machine agricole.

Il est donc essentiel que l'angle selon lequel l'axe 7 est installé par rapport au plan horizontal corresponde à la disposition représentée à la figure 1, ou se rapproche de celle-ci. Pour un angle $\gamma$ égal à 90°, cette orientation automatique de la roue n'est plus assurée. Pour un angle plus petit que 90°, l'installation fonctionnerait en sens inverse et ceci serait alors insensé. Il est évident que l'invention n'est pas limitée à la forme d'exécution décrite ci-dessus et que bien des modifications pourraient y être apportées sans sortir du cadre de la présente demande de brevet.

C'est ainsi qu'il doit encore être souligné que le choix des plaques horizontales 8 destinées au montage de l'axe 7 et du cylindre hydraulique basculant 6 n'est donné que comme représentant une forme d'exécution avantageuse et que l'installation idéale de l'axe 7 pourrait être réalisée par des moyens techniques totalement différents.

## Revendication

1. Installation utilisée en vue de mettre à niveau une machine agricole, entre autres, mais non exclusivement, une machine agricole tirée par un tracteur, telle qu'une arracheuse de pommes de terre ou de betteraves, dans laquelle l'angle que forme au moins un essieu (5) d'une roue (3) avec le plan horizontal, peut être réglé grâce à un montage à charnière, entre le châssis de la machine et le moyeu (4) d'une roue (3), caractérisée en ce qu'au moins un essieu (5) est monté avec une charnière, dont l'axe (7) de pivotement forme, avec le plan horizontal, un angle $\gamma$ autour duquel l'essieu (5) pivote, l'angle $\gamma$ de l'axe (7) étant tel que pour un mouvement pivotant vers le haut ou vers le bas de l'essieu, un pivotement particulier de la roue en question est simultanément assuré par rapport au sens de déplacement, i.e. respectivement vers l'arrière out vers l'avant de la machine, la disposition finale de la roue (3) contrariant le glissement latéral de la machine agricole sur une pente.

## Patentanspruch

1. Vorrichtung zum Waagrechtstellen einer Landmaschine, insbesondere einer von einem Schlepper gezogenen Landmaschine, wie einer Kartoffel- oder Rübenerntemaschine, bei der der Winkel, den mindestens eine Achse (5) eines Rades (3) mit der horizontalen Ebene bildet, mit Hilfe einer Gelenkverbindung zwischen dem Châssis der Maschine und der Nabe (4) eines Rades (3) steuerbar ist, dadurch gekennzeichnet, daß mindestens eine Achse (5) mit einem Gelenk versehen ist, dessen Schwenkachse (7) mit der horizontalen Ebene einen Winkel $\gamma$ bildet, um den die Achse (5) verschwenkbar ist, wobei der Winkel ($\gamma$) der Achse (7) einer Schwenkbewegung der Radachse nach oben oder unten entspricht, eine bestimmte Schwenkbewegung des betreffenden Rades gleichzeitig eine Verschiebebewegung, d.h. nach hinten oder nach vorne bezüglich der Maschine, sicherstellt, und wobei die endgültige Stellung des Rades (3) das seitliche Abgleiten der Landmaschine auf einem Gefälle verhindert.

## Claim

1. Devise being used for levelling an agricultural machine, notably but not exclusively an agricultural machine pulled by a tractor, such as a potato- or beet-lifter, in which that angle at least one axle (5) from a wheel (3) forms with the horizontal plane, is adjustable by means of a hinge arrangement between the machine frame and the nave (4) of a wheel (3), characterized in that at least one axle (5) is mounted with a hinge, the swinging axis (7) of which forms with the horizontal plane, an angle $\gamma$ whereabout the axle (5) swings, the angle $\gamma$ of the axis (7) being such that with an upward or downward swinging movement of the axle, a specific swinging of the pertaining wheel is simultaneously provided for relative to the movement direction, that is respectively to the back or to the front of the machine, the final position of the wheel (3) opposing the sidewise sliding of the agricultural machine on a slope.

FIG.1

FIG. 2

FIG. 3

FIG. 4

FIG.5

FIG. 6

FIG.7